# EUROPÄISCHE PATENTANMELDUNG

(11) **EP 3 450 728 A1**
(43) Veröffentlichungstag der Anmeldung: **06.03.2019**
(21) Anmeldenummer: 18189829.7
(22) Anmeldetag: 20.08.2018
(51) Int. Cl.: F02C 7/36, F02K 3/06

(54) **STRÖMUNGSMASCHINE MIT EINER PLANETENGETRIEBEEINRICHTUNG**

(30) Priorität: 01.09.2017 DE 102017120219
(71) Anmelder: Rolls-Royce Deutschland Ltd & Co KG, 15827 Blankenfelde-Mahlow (DE)
(72) Erfinder: Friedl, Winfried-Hagen, 12305 Berlin (DE); Kickenweitz, Daniel, 12167 Berlin (DE); Venter, Gideon, 14165 Berlin (DE)
(74) Vertreter: Kronthaler, Wolfgang N.K.

(57) **Zusammenfassung**

Es wird eine Strömungsmaschine (1) mit einer Turbineneinrichtung (10), einer Bläsereinrichtung (4) und einer Kompressoreinrichtung (6) beschrieben, wobei die Turbineneinrichtung (11) eine Turbinenwelle (15) aufweist, die mittels einer Planetengetriebeeinrichtung (5) mit einer Bläserwelle (17) der Bläsereinrichtung (4) und einer Kompressorwelle (14) der Kompressoreinrichtung (6) zusammenwirkt. Die Planetengetriebeeinrichtung (5) ist mit einer ersten Welle (W1), einer zweiten Welle (W2) und einer dritten Welle (W3) ausgeführt. Die erste Welle (W1) der Planetengetriebeeinrichtung (5) ist mit der Turbinenwelle (15) der Turbineneinrichtung (11), die zweite Welle (W2) der Planetengetriebeeinrichtung (5) mit der Bläserwelle (17) der Bläsereinrichtung (4) und die dritte Welle (W3) der Planetengetriebeeinrichtung (5; 30; 40; 50) mit der Kompressorwelle (14) der Kompressoreinrichtung (6) drehfest verbunden. Die Planetengetriebeeinrichtung (5) weist eine vierte Welle (W4) auf, die gehäusefest festgelegt ist.

## Beschreibung

Die Erfindung betrifft eine Strömungsmaschine mit einer Turbineneinrichtung, einer Bläsereinrichtung, einer Kompressoreinrichtung und einer Planetengetriebeeinrichtung gemäß der im Oberbegriff des Patentanspruches 1 näher definierten Art.

Aus der Praxis sind Strahltriebwerke mit einer Turbineneinrichtung und einem Bläser bzw. Fan hinlänglich bekannt, bei denen die Turbineneinrichtung direkt mit dem Bläser verbunden ist und der Bläser mit gleicher Drehzahl wie die Turbineneinrichtung, insbesondere eine Niederdruckturbine, umläuft. Bei den auch Getriebefan genannten Mantelstromtriebwerken mit hohem Nebenstromverhältnis ist die direkte Abhängigkeit zwischen der Bläserdrehgeschwindigkeit und der Drehgeschwindigkeit der Turbine aufgelöst, um sowohl den Bläser als auch die Turbine in optimalen Betriebsbereichen betreiben zu können. Beispielsweise erfordert eine Geräuschreduzierung oder ein größerer Bläserdurchmesser eine Reduktion der Bläserdrehzahl, während der Betriebswirkungsgrad der Turbine durch Anheben der Drehzahl bei gleichzeitiger Reduktion des Schaufelradius verbesserbar ist. Der verbesserte Betriebswirkungsgrad bietet wiederum die Möglichkeit, die Turbine mit einer geringeren Anzahl an Turbinenstufen auszuführen, womit die Turbine durch ein geringeres Eigengewicht gekennzeichnet und kostengünstiger herstellbar ist.

Zur Auflösung des Zielkonflikts hinsichtlich der Drehzahlen ist es bekannt, die Turbine und den Bläser über ein Untersetzungsgetriebe in Planetenbauweise miteinander zu verbinden.

Bei aus der Praxis bekannten Ausführungen ist hierbei ein Niederdruckkompressor bzw. ein sogenannter Booster drehfest mit der Niederdruckwelle verbunden, so dass dieser mit gleicher Geschwindigkeit wie die Niederdruckwelle dreht. Hierdurch liegen im Bereich des Niederdruckkompressors betriebszustandsabhängig gegebenenfalls ungünstige Betriebsbedingungen vor.

Des Weiteren ist es aus der WO 2013/151841 A1 bekannt, den Niederdruckkompressor über ein Planetengetriebe in Differentialbauweise von der Niederdruckturbine zu entkoppeln, wobei das Planetengetriebe ebenfalls mit dem Bläser gekoppelt ist. Beispielsweise können die Niederdruckturbine mit einem Planetenträger des Planetengetriebes, der Niederdruckkompressor mit einem Sonnenrad des Planetengetriebes und der Bläser mit einem Hohlrad des Planetengetriebes gekoppelt sein.

Da bei dieser Ausführung im Betrieb des Planetengetriebes kein festes Übersetzungsverhältnis zwischen der Niederdruckturbine, dem Niederdruckkompressor und dem Bläser vorliegt, ist ein großer Regelungsaufwand nötig, um eine gewünschte Aufteilung der Antriebsleistung der Niederdruckturbine auf den Niederdruckkompressor und den Bläser in sämtlichen Betriebszuständen zu gewährleisten und sowohl den Bläser als auch den Niederdruckkompressor mit einer gewünschten Drehzahl zu betreiben.

Zudem ist eine derartige Ausführung gegebenenfalls bei Fehlerfällen im Bereich des Niederdruckkompressors problematisch, da beispielsweise ein Blockieren des Niederdruckkompressors zu einem großen Drehzahlanstieg des Bläsers führt und dieser zur Aufnahme der dabei wirkenden Kräfte entsprechend stark zu dimensionieren ist.

Der vorliegenden Erfindung liegt daher die Aufgabe zugrunde, eine durch einen geringen Bauraumbedarf und ein niedriges Bauteilgewicht gekennzeichnete Strömungsmaschine zur Verfügung zu stellen, die mit einem geringen Regelaufwand betreibbar ist.

Erfindungsgemäß wird diese Aufgabe mit einer Strömungsmaschine mit den Merkmalen des Patentanspruches 1 gelöst.

Es wird eine Strömungsmaschine, insbesondere ein Strahltriebwerk, mit einer Turbineneinrichtung, einer Bläsereinrichtung und einer auch als "Booster" bezeichneten Kompressoreinrichtung vorgeschlagen, wobei die Turbineneinrichtung eine Turbinenwelle aufweist, die mittels einer Planetengetriebeeinrichtung bzw. eines Planetenradsatzes mit einer Bläserwelle der Bläsereinrichtung und einer Kompressorwelle der Kompressoreinrichtung zusammenwirkt, wobei die Planetengetriebeeinrichtung mit einer ersten Welle, einer zweiten Welle und einer dritten Welle ausgeführt ist, und wobei die erste Welle der Planetengetriebeeinrichtung mit der Turbinenwelle der Turbineneinrichtung, die zweite Welle der Planetengetriebeeinrichtung mit der Bläserwelle der Bläsereinrichtung und die dritte Welle der Planetengetriebeeinrichtung mit der Kompressorwelle der Kompressoreinrichtung drehfest verbunden ist.

Erfindungsgemäß wird vorgeschlagen, dass die Planetengetriebeeinrichtung eine vierte Welle aufweist, die gehäusefest festgelegt und beispielsweise mit einem Bläsergehäuse verbunden ist.

Der Begriff "Welle" ist dabei in seinem weitesten Sinne als Ankopplungseinrichtung zu verstehen und umfasst hiermit auch eine konstruktiv stillgesetzte Welle.

Eine erfindungsgemäß ausgeführte Strömungsmaschine hat den Vorteil, dass die Kompressoreinrichtung und der Bläser durch entsprechende Auslegung ohne großen Regelaufwand in einem gewünschten Drehzahlbereich betreibbar sind. Dies ermöglicht die Einhaltung eines niedrigen Treibstoffverbrauchs, aber auch eine Ausführung mit geringem Bauraumbedarf und niedrigem Bauteilgewicht. Indem zwischen der Turbineneinrichtung und dem Bläser für alle Betriebszustände ein festes Drehzahlverhältnis vorliegt, ist das System insgesamt besser beherrschbar. So kann beispielsweise ein möglicher Drehzahlanstieg des Bläsers bei einer Fehlfunktion der Kompressoreinrichtung, z. B. bei einem Bruch einer Sollbruchstelle nach einer Blockade der Kompressoreinrichtung, gegenüber einer Ausführung der Planetengetriebeeinrichtung in Differentialbauweise stark reduziert werden.

Die erfindungsgemäße Ausgestaltung der Strömungsmaschine erlaubt es ferner, einen Annulus bzw. Innendurchmesser der Kompressoreinrichtung aerodynamisch unabhängig auszulegen, wobei ein größerer Innendurchmesser bei gleichbleibender Schaufelspitzengeschwindigkeit in der Kompressoreinrichtung realisierbar ist. Mit anderen Worten kann der Booster bzw. die Kompressoreinrichtung radial vergrößert bzw. radial nach außen verschoben werden. Diese radiale Verlagerung ermöglicht wiederum eine zumindest teilweise Platzierung des Planetengetriebes radial innerhalb der Kompressoreinrichtung, wodurch eine axial kompaktere Bauweise erzielbar ist. Durch den größeren Innendurchmesser der Kompressoreinrichtung in Verbindung mit einer geringeren Drehgeschwindigkeit können auch die mechanischen Lasten reduziert werden, und es ergibt sich ein steilerer Neigungswinkel im Bereich einer Nabe des Bläsers, wodurch der von diesem erzeugte Druck ansteigt.

Bei der Kompressoreinrichtung bzw. dem Booster handelt es sich vorzugsweise um einen Niederdruckkompressor oder einen Mitteldruckkompressor, welcher entsprechend mit der Niederdruckturbinenwelle oder der Mitteldruckturbinenwelle verbunden ist.

Ein hoher Wirkungsgrad lässt sich bei der erfindungsgemäßen Strömungsmaschine erzielen, wenn die Planetengetriebeeinrichtung als ein Stufenplanetengetriebe ausgeführt ist.

Bei einer vorteilhaften Ausführung einer erfindungsgemäßen Strömungsmaschine umfasst die vierte Welle einen Planetenträger der Planetengetriebeeinrichtung, so dass ein sogenanntes Standplanetengetriebe vorliegt. Die Drehrichtung eines Sonnenrads und eines Hohlrads ist dabei zueinander entgegengesetzt.

Die Übersetzung zwischen der Turbineneinrichtung und der Kompressoreinrichtung ist auf konstruktiv einfache Weise in einem breiten Bereich einstellbar, wenn die erste Welle der Planetengetriebeeinrichtung ein Sonnenrad, die zweite Welle der Planetengetriebeeinrichtung ein Hohlrad und die dritte Welle der Planetengetriebeeinrichtung ein weiteres Sonnenrad umfasst, das mit mit Planeten drehfest verbundenen Zahnrädern in Wirkverbindung steht. Die Planeten der Planetengetriebeeinrichtung können dabei insbesondere zwei Zahnräder aufweisen, wobei ein erstes Zahnrad sowohl mit dem Sonnenrad als auch mit dem Hohlrad und ein zweites Zahnrad mit dem weiteren Sonnenrad zusammenwirkt bzw. mit diesen kämmt.

Bei einer vorteilhaften Weiterbildung einer erfindungsgemäßen Strömungsmaschine weisen die Planeten der Planetengetriebeeinrichtung drei Zahnräder auf, wobei ein erstes Zahnrad der Planeten mit dem die erste Welle bildenden Sonnenrad, ein zweites Zahnrad der Planeten mit dem die dritte Welle bildenden weiteren Sonnenrad und ein drittes Zahnrad der Planeten mit dem die zweite Welle bildenden Hohlrad zusammenwirkt bzw. kämmt. Hierdurch ist eine sehr flexible Einstellung sämtlicher Übersetzungsverhältnisse zwischen der Turbineneinrichtung, der Kompressoreinrichtung und der Bläsereinrichtung in einem großen Bereich möglich.

Bei einer hierzu alternativen Ausführung der Erfindung ist es vorgesehen, dass die Planeten drei Zahnräder aufweisen, wobei ein erstes Zahnrad der Planeten mit dem die erste Welle bildenden Sonnenrad, ein zweites Zahnrad der Planeten mit dem die dritte Welle bildenden weiteren Sonnenrad und ein drittes Zahnrad der Planeten mit einem zusätzlichen, die zweite Welle bildenden Sonnenrad zusammenwirkt bzw. kämmt. Hierdurch ist eine bauraumgünstige und kostengünstige Ausführung möglich, bei der die Bläsereinrichtung und die Kompressoreinrichtung die gleiche Drehrichtung aufweisen.

Wenn die vierte Welle der Planetengetriebeeinrichtung ein Hohlrad umfasst und somit ein epizyklisches Planetengetriebe vorliegt, sind große Übersetzungsverhältnisse zwischen der Turbineneinrichtung, der Bläsereinrichtung und der Kompressoreinrichtung auf konstruktiv einfache Weise erzielbar.

Um eine Strömungsmaschine mit einer in Längsrichtung geringen Erstreckung zu schaffen, ist es vorteilhaft, die Planetengetriebeeinrichtung in axialer Richtung der Strömungsmaschine zumindest bereichsweise, insbesondere vollständig radial innerhalb der Kompressoreinrichtung anzuordnen. Dabei kann der Massenmittelpunkt der Strömungsmaschine vorteilhafterweise in Strömungsrichtung nach hinten verlagert werden. Bei einer Anbindung der Strömungsmaschine als Strahltriebwerk an einen Flügel eines Flugzeugs kann hiermit der Vorstand des Strahltriebwerks vom Flügel in Richtung Flugzeugfront reduziert werden, und die Hebelkräfte bei der Aufhängung des Triebwerks an dem Flugzeugflügel werden entsprechend verkleinert.

Sowohl die in den Patentansprüchen angegeben Merkmale als auch die in den nachfolgenden Ausführungsbeispielen der erfindungsgemäßen Strömungsmaschine angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Gegenstandes ergeben sich aus den Patentansprüchen und aus den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine stark vereinfachte Prinzipskizze eines Strahltriebwerks im Längsschnitt, mit einem Bläser, einer Niederdruckturbine und einem Niederdruckkompressor, wobei der Bläser und der Niederdruckkompressor über ein Planetengetriebe mit der Niederdruckturbine in Wirkverbindung stehen; und
- Fig. 2 bis 4: vereinfachte Schnittdarstellungen eines Ausschnitts des Strahltriebwerks gemäß Fig. 1, wobei der Bläser und der Niederdruckkompressor über jeweils alternativ ausgeführte Planetengetriebe an die Niederdruckturbine angebunden sind.

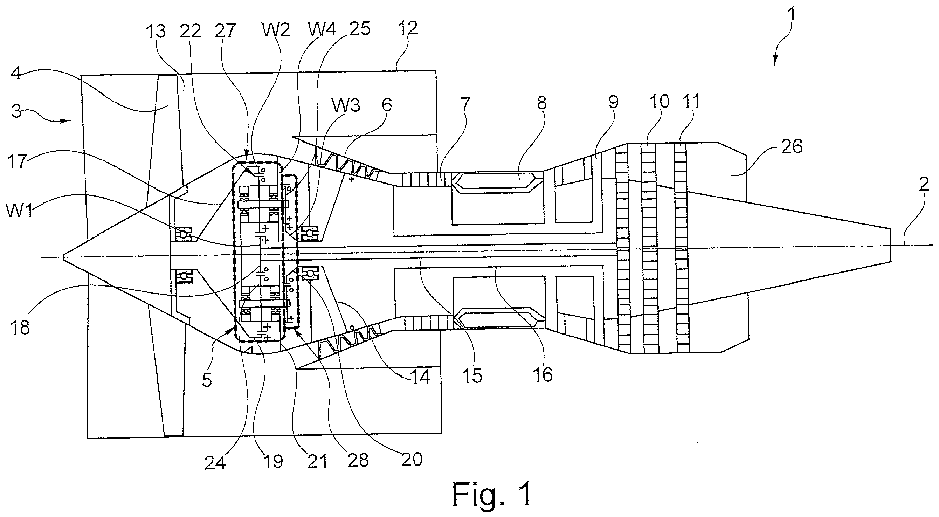

In Fig. 1 ist eine als Strahltriebwerk 1 bzw. Gasturbinentriebwerk ausgeführte Strömungsmaschine gezeigt. Das Strahltriebwerk 1 weist eine Haupt- und Drehachse 2 auf. Des Weiteren umfasst das Strahltriebwerk 1 in axialer Strömungsrichtung einen Lufteinlass 3, eine Bläsereinrichtung bzw. einen Bläser 4 bzw. einen Fan, eine Planetengetriebeeinrichtung 5, eine als Booster bzw. Niederdruckkompressor 6 ausgeführte Kompressoreinrichtung, einen Hochdruckkompressor 7, eine Verbrennungseinrichtung 8, eine Hochdruckturbine 9 und eine Niederdruckturbine 11 als Turbineneinrichtungen und eine Ausströmdüse 26. Eine Triebwerksgondel 12 umgibt das Gasturbinentriebwerk 1 und begrenzt den Lufteinlass 3.

Das Strahltriebwerk 1 arbeitet prinzipiell in der herkömmlichen Weise eines Mantelstromtriebwerks, wobei in den Lufteinlass 3 eintretende Luft durch den Bläser 4 beschleunigt wird, um zwei Luftströme zu erzeugen. Ein erster Luftstrom strömt in den Niederdruckkompressor 6 und ein zweiter Luftstrom wird durch einen Nebenstromkanal bzw. Bypasskanal 13 geführt, um einen Antriebsschub bereitzustellen. Der Niederdruckkompressor 6 komprimiert den ihm zugeführten Luftstrom, bevor die Luft im Bereich des Hochdruckkompressors 7 weiter verdichtet wird.

Die aus dem Hochdruckkompressor 7 ausströmende Druckluft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 11 an, bevor sie über die Ausströmdüse 26 ausgeführt werden, um einen zusätzlichen Antriebsschub bereitzustellen. Die Hochdruckturbine 9 treibt den Hochdruckkompressor 7 über eine Hochdruckwelle 16 an. Die Niederdruckturbine 11 ist mit einer Turbinenwelle bzw. Niederdruckwelle 15 verbunden, mittels der der Bläser 4 über die ein Untersetzungsgetriebe darstellende Planetengetriebeeinrichtung 5 angetrieben wird.

Die als Standplanetengetriebe ausgeführte Planetengetriebeeinrichtung 5 ist zur Übertragung von Drehmoment von der Niederdruckwelle 15 der Niederdruckturbine 11 auf eine Bläserwelle 17 des Bläsers 4 und eine Niederdruckkompressorwelle 14 des Niederdruckkompressors 6 ausgeführt, wobei der Bläser 4 und der Niederdruckkompressor 6 jeweils mit einer anderen Drehgeschwindigkeit als die Niederdruckturbine 11 drehen. Im Betrieb dreht vorzugsweise der Bläser 4 mit einer kleineren Drehgeschwindigkeit als der Niederdruckkompressor 6, der vorzugsweise wiederum langsamer als die Niederdruckturbine 11 dreht. Der Niederdruckkompressor 6 dreht bei der Ausführung gemäß Fig. 1 in der gleichen Drehrichtung wie die Niederdruckturbine 11, wohingegen der Bläser 4 in hierzu entgegengesetzter Richtung dreht.

Die Planetengetriebeeinrichtung 5 stellt ein Stufenplanetengetriebe mit einer epizyklischen Getriebeeinheit 27 und einer Booster-Vorgelegegetriebeeinheit 28 bzw. Layshaft-Reduktion dar, wobei die Planetengetriebeeinrichtung 5 mit einer ersten Welle W1, einer zweiten Welle W2, einer dritten Welle W3 und einer vierten Welle W4 ausgeführt ist, von denen die erste Welle W1 mit der Niederdruckwelle 15 verbunden ist und ein Sonnenrad 18 umfasst, wobei die zweite Welle W2 mit der die Bläsereinrichtung 4 antreibenden Bläserwelle 17 verbunden ist und ein Hohlrad 19 umfasst. Die dritte Welle W3 ist mit der Niederdruckkompressorwelle 14 verbunden und umfasst ein weiteres Sonnenrad 20, wobei die vierte Welle W4 einen hier mit der Triebwerksgondel 12 gehäusefest festgelegten Planetenträger 21 umfasst.

Planeten 22 der Planetengetriebeeinrichtung 5, die gegenüber dem Planetenträger 21 drehbar gelagert sind, weisen vorliegend jeweils zwei Zahnräder 24, 25 auf, von denen das erste Zahnrad 24 einerseits mit dem Sonnenrad 18 und andererseits mit dem Hohlrad 19 und das zweite Zahnrad 25 mit dem weiteren Sonnenrad 20 kämmt.

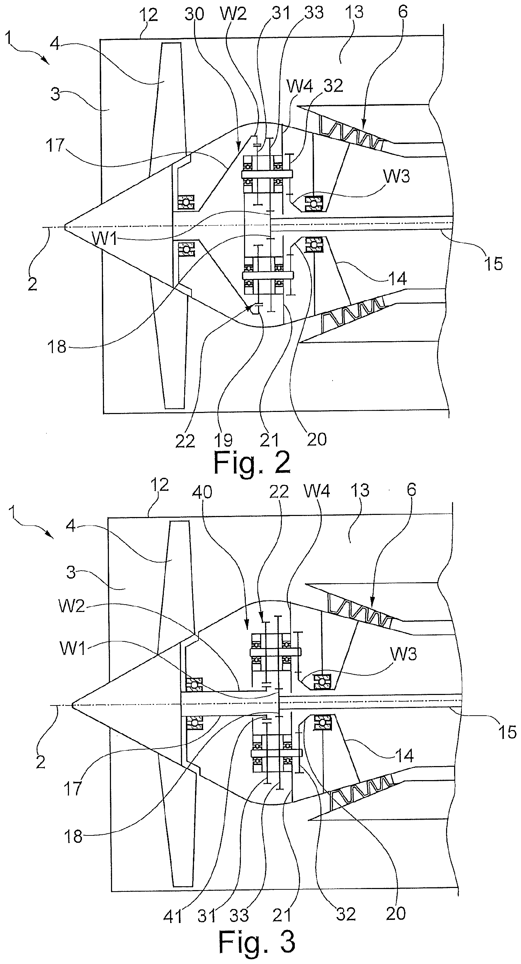

In Fig. 2 bis Fig. 4 sind alternativ zur Planetengetriebeeinrichtung 5 ausgeführte Planetengetriebeeinrichtungen 30, 40 und 50 gezeigt, wobei im Folgenden lediglich auf die Unterschiede der Planetengetriebeeinrichtungen 30, 40, 50 gegenüber der Planetengetriebeeinrichtung 5 eingegangen wird und ansonsten auf die Ausführungen zur Planetengetriebeeinrichtung 5 verwiesen wird.

Bei der Planetengetriebeeinrichtung 30 gemäß Fig. 2 weisen die Planeten 22 jeweils drei Zahnräder 31, 32, 33 auf, wobei das erste Zahnrad 31 lediglich mit dem Hohlrad 19, das zweite Zahnrad 32 lediglich mit dem weiteren Sonnenrad 20 und das dritte Zahnrad 33 lediglich mit dem Sonnenrad 18 kämmt.

Durch eine entsprechende Wahl der Durchmesser der Zahnräder 31, 32, 33 und dem damit zusammenwirkenden Sonnenrad 18, dem Hohlrad 19 und dem weiteren Sonnenrad 20 sind Übersetzungen zwischen der Niederdruckturbine 11, dem Bläser 4 und dem Niederdruckkompressor 6 auf einfache Weise mit einer großen Bandbreite wählbar.

Die Planetengetriebeeinrichtung 40 gemäß Fig. 3 unterscheidet sich hiervon lediglich dadurch, dass das erste Zahnrad 31 der Planeten 22 nicht mit dem Hohlrad 19, sondern mit einem zusätzlichen, mit der Bläserwelle 17 verbundenen Sonnenrad 41, das Teil der zweiten Welle W2 ist, in Eingriff steht, und dass die Planetengetriebeeinrichtung 40 ohne Hohlrad ausgebildet ist. Eine derartig ausgeführte Planetengetriebeeinrichtung 40 ist bauraumgünstig und kostengünstig realisierbar.

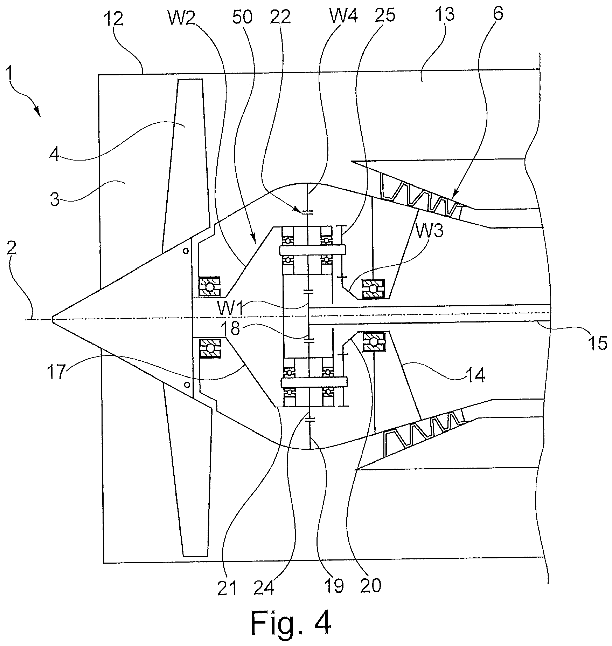

Die in Fig. 4 gezeigte Planetengetriebeeinrichtung 50 stellt wiederum ein Stufenplanetengetriebe dar, welches hier als epizyklisches Planetengetriebe ausgebildet ist. Die erste Welle W1 ist mit der Niederdruckwelle 15 verbunden und umfasst das Sonnenrad 18. Die zweite Welle W2 ist mit der Bläserwelle 17 verbunden und umfasst den Planetenträger 21. Die dritte Welle W3 ist mit der Niederdruckwelle 15 verbunden und umfasst das weitere Sonnenrad 20, wobei die vierte Welle W4 den gehäusefest festgelegten Planetenträger 21 umfasst. Die Planeten 22 der Planetengetriebeeinrichtung 5 weisen vorliegend wiederum jeweils zwei Zahnräder 24, 25 auf, von denen das erste Zahnrad 24 einerseits mit dem Sonnenrad 18 und andererseits mit dem Hohlrad 19 und das zweite Zahnrad 25 mit dem weiteren Sonnenrad 20 kämmt.

Gegenüber der Ausführung der Planetengetriebeeinrichtung als Standplanetengetriebe sind mit der Ausführung der Planetengetriebeeinrichtung 50 vorteilhaft große Übersetzungsverhältnisse zwischen der Niederdruckturbine 11, dem Niederdruckkompressor 6 und dem Bläser 4 erzielbar.

Bei den gezeigten Ausführungsbeispielen sind der Bläser 4 und der Booster 6 jeweils über die Planetengetriebeeinrichtung mit der Niederdruckturbine 11 gekoppelt.

### Bezugszeichenliste

- 1: Strömungsmaschine; Strahltriebwerk
- 2: Drehachse
- 3: Lufteinlass
- 4: Bläsereinrichtung
- 5: Planetengetriebeeinrichtung
- 6: Kompressoreinrichtung; Niederdruckkompressor (Booster)
- 7: Hochdruckkompressor
- 8: Verbrennungseinrichtung
- 9: Turbineneinrichtung; Hochdruckturbine
- 11: Turbineneinrichtung; Niederdruckturbine
- 12: Triebwerksgondel
- 13: Nebenstromkanal
- 14: Niederdruckkompressorwelle
- 15: Niederdruckwelle
- 16: Hochdruckwelle
- 17: Bläserwelle
- 18: Sonnenrad
- 19: Hohlrad
- 20: weiteres Sonnenrad
- 21: Planetenträger
- 22: Planet
- 24: erstes Zahnrad
- 25: zweites Zahnrad
- 26: Ausströmdüse
- 27: epizyklische Getriebeeinheit
- 28: Booster-Vorgelegegetriebeeinheit
- 30: Planetengetriebeeinrichtung
- 31: erstes Zahnrad
- 32: zweites Zahnrad
- 33: drittes Zahnrad
- 40: Planetengetriebeeinrichtung
- 41: zusätzliches Sonnenrad
- 50: Planetengetriebeeinrichtung
- W1: erste Welle
- W2: zweite Welle
- W3: dritte Welle
- W4: vierte Welle

## Patentansprüche

1. Strömungsmaschine (1) mit einer Turbineneinrichtung (11), einer Bläsereinrichtung (4) und einer Kompressoreinrichtung (6), wobei die Turbineneinrichtung (11) eine Turbinenwelle (15) aufweist, die mittels einer Planetengetriebeeinrichtung (5; 30; 40; 50) mit einer Bläserwelle (17) der Bläsereinrichtung (4) und einer Kompressorwelle (14) der Kompressoreinrichtung (6) zusammenwirkt, wobei die Planetengetriebeeinrichtung (5; 30; 40; 50) mit einer ersten Welle (W1), einer zweiten Welle (W2) und einer dritten Welle (W3) ausgeführt ist, und wobei die erste Welle (W1) der Planetengetriebeeinrichtung (5; 30; 40; 50) mit der Turbinenwelle (15) der Turbineneinrichtung (11), die zweite Welle (W2) der Planetengetriebeeinrichtung (5; 30; 40; 50) mit der Bläserwelle (17) der Bläsereinrichtung (4) und die dritte Welle (W3) der Planetengetriebeeinrichtung (5; 30; 40; 50) mit der Kompressorwelle (14) der Kompressoreinrichtung (6) drehfest verbunden ist, **dadurch gekennzeichnet, dass** die Planetengetriebeeinrichtung (5; 30; 40; 50) eine vierte Welle (W4) aufweist, die gehäusefest festgelegt ist.

2. Strömungsmaschine nach Anspruch 1, **dadurch gekennzeichnet, dass** die Planetengetriebeeinrichtung (5; 30; 40; 50) ein Stufenplanetengetriebe ist.

3. Strömungsmaschine nach einem der Ansprüche 1 oder 2, **dadurch gekennzeichnet, dass** die vierte Welle (W4) einen Planetenträger (21) der Planetengetriebeeinrichtung (5; 30; 40) umfasst.

4. Strömungsmaschine nach einem der Ansprüche 1 bis 3, **dadurch gekennzeichnet, dass** die erste Welle (W1) der Planetengetriebeeinrichtung (5; 30; 40) ein Sonnenrad (18), die zweite Welle (W2) der Planetengetriebeeinrichtung (5; 30; 40) ein Hohlrad (19) oder ein Sonnenrad (41) und die dritte Welle (W3) der Planetengetriebeeinrichtung (5; 30; 40) ein weiteres Sonnenrad (20) umfasst, das mit mit Planeten (22) der Planetengetriebeeinrichtung (5; 30; 40) drehfest verbundenen Zahnrädern (24, 25; 31, 32, 33) in Wirkverbindung steht.

5. Strömungsmaschine nach Anspruch 4, **dadurch gekennzeichnet, dass** die Planeten (22) der Planetengetriebeeinrichtung (30; 40) drei Zahnräder (31, 32, 33) aufweisen, wobei ein erstes Zahnrad (33) der Planeten (22) mit dem die erste Welle (W1) bildenden Sonnenrad (18), ein zweites Zahnrad (32) der Planeten (22) mit dem die dritte Welle (W3) bildenden weiteren Sonnenrad (20) und ein drittes Zahnrad (31) der Planeten (22) mit dem die zweite Welle (W2) bildenden Hohlrad (19) zusammenwirkt.

6. Strömungsmaschine nach Anspruch 1 oder 2, **dadurch gekennzeichnet, dass** die Planeten (22) der Planetengetriebeeinrichtung (30; 40) drei Zahnräder (31, 32, 33) aufweisen, wobei ein erstes Zahnrad (33) der Planeten (22) mit dem die erste Welle (W1) bildenden Sonnenrad (18), ein zweites Zahnrad (32) der Planeten (22) mit dem die dritte Welle (W3) bildenden weiteren Sonnenrad (20) und ein drittes Zahnrad (31) der Planeten (22) mit einem zusätzlichen, die zweite Welle (W2) bildenden Sonnenrad (41) zusammenwirkt.

7. Strömungsmaschine nach einem der Ansprüche 1 bis 6, **dadurch gekennzeichnet, dass** die vierte Welle (W4) der Planetengetriebeeinrichtung (50) ein Hohlrad (19) umfasst.

8. Strömungsmaschine nach Anspruch 7, **dadurch gekennzeichnet, dass** die erste Welle (W1) der Planetengetriebeeinrichtung (50) ein Sonnenrad (18), die zweite Welle (W2) der Planetengetriebeeinrichtung (50) ein Planetenträger (21) und die dritte Welle (W3) der Planetengetriebeeinrichtung (50) ein weiteres Sonnenrad (20) ist, das mit mit Planeten (22) verbundenen Zahnrädern (24, 25) zusammenwirkt.

9. Strömungsmaschine nach einem der Ansprüche 1 bis 8, **dadurch gekennzeichnet, dass** die Planetengetriebeeinrichtung (5; 30; 40; 50) in axialer Richtung (A) der Strömungsmaschine (1) zumindest bereichsweise, insbesondere vollständig radial innerhalb der Kompressoreinrichtung (6) angeordnet ist.
